# EUROPÄISCHE PATENTSCHRIFT

(11) **EP 0 692 520 B1**
(45) Veröffentlichungstag und Bekanntmachung des Hinweises auf die Patenterteilung: **29.10.1997**
(21) Anmeldenummer: 95110442.1
(22) Anmeldetag: 05.07.1995
(51) Int. Cl.: C08L 51/00, C08L 51/08, C11D 3/37, C11D 3/00

(54) **Niederviskose Mischungen aus amphiphilen nicht-ionischen Pfropfcopolymeren und viskositätserniedrigenden Zusätzen**
Low viscosity blends from amphiphilic non-ionic graft copolymers and viscosity reducing additives
Mélanges à faible viscosité de copolymères greffés non-ioniques amphiphiles et additifs réduisant la viscosité

(30) Priorität: 14.07.1994 DE 4424818
(43) Veröffentlichungstag der Anmeldung: 17.01.1996
(73) Patentinhaber: BASF Aktiengesellschaft, 67063 Ludwigshafen (DE)
(72) Erfinder: Boeckh, Dieter, Dr., D-67117 Limburgerhof (DE); Seelmann-Eggebert, Hans-Peter, Dr., D-67117 Limburgerhof (DE); Jäger, Hans-Ulrich, Dr., D-67434 Neustadt (DE); Kahl, Rolf-Dieter, D-67454 Hassloch (DE); Schornick, Gunnar, Dr., D-67271 Neuleiningen (DE)

(56) Entgegenhaltungen:
- EP-A- 0 285 935
- EP-A- 0 342 887
- EP-A- 0 358 474

## Beschreibung

Die Erfindung betrifft niederviskose Mischungen aus amphiphilen nicht-ionischen Pfropfcopolymerisaten, die
(a) mindestens 20 Gew.-% Polyalkylenoxideinheiten oder Polyvinylpyrrolidoneinheiten als hydrophilen Teil des Moleküls und
(b) mindestens 40 Gew.-% Vinylester- und/oder (Meth)acrylestereinheiten als hydrophoben Teil des Moleküls einpolymerisiert enthalten
mit mindestens einem viskositätserniedrigenden Zusatz. Diese Mischungen werden als Zusatz bei der Herstellung von Wasch- und Reinigungsmitteln verwendet.

Amphiphile nichtionische Pfropfcopolymerisate, die beispielsweise durch radikalisch initiierte Pfropfcopolymerisation in der Schmelze hergestellt werden, stellen hochviskose Harze dar, die auch bei Temperaturen bis zu 60°C häufig so viskos sind, daß kein freies Fließen beobachtet wird. Die hohe Viskosität der Pfropfcopolymerisate ist für die technische Anwendung problematisch, weil diese Polymerisate nur bei relativ hohen Temperaturen verarbeitet werden können. Amphiphile nichtionische Pfropfcopolymerisate sind beispielsweise aus der EP-B-0 219 048 bekannt. Sie werden beispielsweise durch Pfropfen von (a) Polyalkylenoxiden eines Molekulargewichts (nach dem Zahlenmittel) von 2000 bis 100.000 auf Basis von Ethylenoxid, Propylenoxid und/oder Butylenoxid mit (b) Vinylacetat im Gewichtsverhältnis (a) : (b) von 1 : 0, 2 bis 1 : 10 hergestellt. Die einpolymerisierten Vinylacetatgruppen können gegebenenfalls bis zu 15 % verseift sein. Die Copolymerisate werden als Vergrauungsinhibitoren beim Waschen von Synthesefasern enthaltendem Textilgut verwendet.

Aus der EP-B-0 285 935 ist die Verwendung von Pfropfpolymerisaten als Vergrauungsinhibitor beim Waschen oder Nachbehandeln von synthetische Fasern enthaltendem Textilgut bekannt, wobei die Pfropfpolymerisate dadurch hergestellt werden, daß man
(a) Polyalkylenoxide eines Molekulargewichts (nach dem Zahlenmittel) von 300 bis 100.000 auf Basis von Ethylenoxid, Propylenoxid und/oder Butylenoxid mit
(b) mindestens einem Vinylester der sich von einer gesättigten 3 bis 6 C-Atomen enthaltenden Monocarbonsäure ableitet, Acrylsäuremethylester, Acrylsäureethylester, Methacrylsäuremethylester und/oder Methacrylsäureethylester sowie gegebenenfalls Mischungen aus einem der genannten Monomeren und bis zu 95 Gew.-% Acetat im Gewichtsverhältnis (a) : (b) von 1 : 0,2 bis 1 : 10 einer radikalisch initiierten Copolymerisation unterwirft.

Aus der DE-A-37 11 298 ist die Verwendung von amphiphilen nichtionischen Pfropfcopolymerisaten als Vergrauungsinhibitor beim Waschen und Nachbehandeln von Synthesefasern enthaltenden Textilgut bekannt. Die Pfropfcopolymerisate sind dadurch erhältlich, daß man
(a) mindestens einseitig endgruppenverschlossene Polyalkylenoxide eines Molekulargewichts (nach dem Zahlenmittel) von 300 bis 100.000 auf Basis von Ethylenoxid, Propylenoxid und/oder Butylenoxid mit
(b) mindestens einem Vinylester, der sich von einer gesättigten 1 bis 6 C-Atome enthaltenden Monocarbonsäure ableitet und/oder einem Methyl- oder Ethylester der Acrylsäure oder Methacrylsäure
im Gewichtsverhältnis (a) : (b) von 1 : 0,2 bis 1 : 10 einer radikalisch initiierten Copolymerisation unterwirft.

Aus der DE-A-37 11 299 ist bekannt, daß man Pfropfcopolymerisate, die erhältlich sind durch Pfropfen von
(a) Polyvinylpyrrolidon eines Molekulargewichts (nach dem Viskositätsmittel) von 500 bis 150.000 mit
(b) mindestens einem Vinylester, der sich von einer gesättigten 1 bis 6 C-Atome enthaltenden Monocarbonsäure ableitet und/oder (Meth)acrylsäuremethylester oder -ethylester
im Gewichtsverhältnis (a) : (b) von 1 : 0,5 bis 1 : 10, als Vergrauungsinhibitoren beim Waschen und Nachbehandeln von Synthesefasern enthaltenden Textilgut verwendet.

Aus der EP-B-0 286 019 ist die Verwendung von Pfropfpolymerisaten auf Basis von Polyestern, Polyesterurethanen und Polyesteramiden als Vergrauungsinhibitoren in Waschmitteln bekannt. Die als Pfropfgrundlage dienenden Polyester, Polyesterurethane und Polyesteramide enthalten als amphiphilen Teil des Moleküls Polyalkylenoxideinheiten und als hydrophoben Teil des Moleküls aufgepfropfte Einheiten von Vinylestern gesättigter C₁- bis C₆-Carbonsäuren und/oder Acrylsäure- und/oder Methacrylsäureester von gesättigten einwertigen 1 bis 4 C-Atome enthaltenden Alkoholen.

Aus der EP-A-0 342 887 sind Mischungen aus anionischen Block-copolymerisaten und viskositätserniedrigenden Zusätzen bekannt. Als viskositätserniedrigende Zusätze eignen sich beispielsweise Fettsäuren mit 8 bis 22 Kohlenstoffatomen, Anlagerungsprodukte von Ethylenoxid an Alkylphenole, Fettalkohole und Fettsäuren, Polyalkylenglykole und Dialkylether von Ethylenglykol. Solche Mischungen sind aufgrund der geringeren Viskosität technisch besser zur Herstellung von Waschmittelformulierungen geeignet als die hochviskosen Blockcopolymerisate.

Der Erfindung liegt die Aufgabe zugrunde, für den Einsatz in Wasch- und Reinigungsmitteln geeignete niedrigviskose Mischungen von amphiphilen nicht-ionischen Pfropfcopolymerisaten zur Verfügung zu stellen ohne die waschtechnischen Eigenschaften der Polymeren oder der Wasch- und Reinigungsmittelformulierungen negativ zu beeinflussen.

Die Aufgabe wird erfindungsgemäß gelöst mit niederviskosen Mischungen aus
(I) 40 bis 97,5 Gew.-% amphiphilen nicht-ionischen Pfropfcopolymerisaten, die
   (a) mindestens 20 Gew.-% Polyalkylenoxideinheiten oder Polyvinylpyrrolidoneinheiten als hydrophilen Teil des Moleküls und
   (b) mindestens 40 Gew.-% Vinylester- und/oder (Meth)acrylestereinheiten als hydrophoben Teil des Moleküls einpolymerisiert enthalten und
(II) 2,5 bis 60 Gew.-% mindestens eines viskositätserniedrigenden Zusatzes aus der Gruppe Polyalkylenglykole, alkoxylierte Alkohole, alkoxylierte Alkylphenole, alkoxylierte Amine und Hydroxyverbindungen mit 1 bis 4 OH-Gruppen und 2 bis 10 C-Atomen, wobei die Molmasse M_{N} der Polymeren jeweils höchstens 2500 beträgt und
(III) 0 bis 40 Gew.-% homogenisierenden oder phasenstabilisierenden Zusätzen aus der Gruppe
   (a) Wasser
   (b) ein- und zweibasischer Carbonsäuren mit 8 bis 25 C-Atomen, Fettalkoholsulfate, Fettalkoholsulfonate, Alkylbenzolsulfonate, Sulfonierungs- und/oder Sulfatierungsprodukten von alkoxylierten Alkoholen mit 8 bis 22 C-Atomen oder Alkylphenolen, Alkyl(poly)glukosiden mit 1 bis 20 C-Atomen in der Alkylgruppe, Mono-, Oligo- und Polysacchariden sowie der daraus durch Oxidation oder Reduktion erhältlichen Derivate sowie
   (c) Mischungen aus (a) und (b) im Gewichtsverhältnis 100 : 1 bis 20 : 80.

Bevorzugt sind niederviskose phasenstabile Mischungen aus
(I) 50 bis 90 Gew.-% amphiphilen nichtionischen Pfropfpolymerisaten, die
   a) mindestens 20 Gew.-% Polyalkylenoxideinheiten als hydrophilen Teil des Moleküls und
   b) mindestens 40 Gew.-% Vinylester- und/oder Acrylestereinheiten als hydrophoben Teil des Moleküls einpolymerisiert enthalten,
(II) 5 bis 48 Gew.-% mindestens eines viskositätserniedrigenden Zusatzes aus der Gruppe Polyalkylenglycole, alkoxylierte Alkohole, alkoxylierte Amine und Hydroxyverbindungen mit 1 bis 4 OH-Gruppen und 2 bis 10 C-Atomen, wobei die Molmassen Mₙ der Polymeren jeweils höchstens 2500 beträgt und
(III) 2 bis 20 Gew.-% Wasser
mit einer Viskosität kleiner 5.000 mPas bei 60°C.

Die als Komponente (I) in Betracht kommenden amphiphilen nicht-ionischen Pfropfcopolymerisate sind aus den oben angegebenen Literaturstellen bekannt, z.B. EP-B-0 219 048, EP-B-0 285 935, DE-A 37 11 298 und DE-A 37 11 299. Die darin beschriebenen amphiphilen nicht-ionischen Pfropfcopolymerisate enthalten
(a) mindestens 20, vorzugsweise 25 bis 50 Gew.-% an Polyalkylenoxideinheiten oder Polyvinylpyrrolidoneinheiten als hydrophilen Teil des Moleküls und
(b) mindestens 40, vorzugsweise 50 bis 75 Gew.-% Vinylester- und/ oder (Methacrylestereinheiten als hydrophoben Teil des Moleküls einpolymerisiert.

Die amphiphilen nicht-ionischen Pfropfcopolymerisate (I) werden vorzugsweise durch radikalisch initiierte Pfropfcopolymerisation von
(a) Alkylenoxid- oder Vinylpyrrolidoneinheiten enthaltenden Polymeren als Pfropfgrundlage mit
(b) Vinylester- und/oder Methacrylestern in einer lösemittelfreien Schmelze oder in Gegenwart von höchstens 20 Gew.-%, vorzugsweise höchstens 10 Gew.-% eines Lösemittels hergestellt.

Solche Pfropfcopolymerisate haben üblicherweise sehr hohe Viskositäten, die selbst bei einer Temperatur von 50°C noch oberhalb von 50.000 mPas liegen können. Als Pfropfgrundlage (a) der amphiphilen nicht-ionischen Pfropfcopolymerisate verwendet man Polyalkylenoxide eines Molekulargewichts (nach dem Zahlenmittel) von 2000 bis 100.000 auf Basis von Ethylenoxid, Propylenoxid und/ oder Butylenoxid. Die Pfropfgrundlage bildet den hydrophilen Teil des amphiphilen nicht-ionischen Pfropfcopolymerisats. Vorzugsweise verwendet man Polyethylenoxide oder Blockcopolymerisate aus Ethylenoxid und Propylenoxid und gegebenenfalls Butylenoxid oder Blockcopolymerisate aus Ethylenoxid und Butylenoxid. Die Alkylenoxideinheiten können in der Komponente (a) auch in statistischer Verteilung einpolymerisiert sein. Die Polyalkylenoxide können gegebenenfalls ein- oder beidseitig endgruppenverschlossen sein, z.B. mit C₁- bis C₁₈-Carbonsäuren verestert oder mit C₁- bis C₁₈-Alkyl verethert sein. Auf die Pfropfgrundlage (a) werden Vinylester von gesättigten C₁- bis C₆-Carbonsäuren und/oder Acrylsäure- und Methacrylsäureester von C₁- bis C₄-Alkoholen, vorzugsweise einwertigen C₁- bis C₄-Alkoholen unter Einwirkung Radikale bildender Polymerisationsinitiatoren aufgepfropft. Als Monomere (b) verwendt man vorzugsweise Vinylformiat, Vinylacetat, Acrylsäuremethylester, Acrylsäureethylester und Methacrylsäuremethylester. Das Gewichtsverhältnis der Komponente (a) und (b) beträgt 1 : 0,2 bis 1 : 10, vorzugsweise 1 : 0,5 bis 1 : 6. Die Pfropfcopolymerisate haben beispielsweise einen K-Wert nach Fikentscher von 15 bis 45 (bestimmt in 1 gew.-%iger Lösung in Essigsäureethylester bei 25°C).

Als Pfropfgrundlage (a) eignen sich außerdem Polyvinylpyrrolidone eines Molekulargewichts (nach dem Viskositätsmittel) von 500 bis 150.000. Die K-Werte der daraus erhältlichen Pfropfcopolymerisate mit Vinylestern und (Meth)acrylsäureestern liegen ebenfalls in dem oben angegebenen Bereich für die Pfropfcopolymerisate auf Polyalkylenoxiden.

Die amphiphilen nicht-ionischen Pfropfcopolymerisaten der Gruppe (I) sind in den Mischungen in einer Menge von 40 bis 97,5, vorzugsweise 50 bis 90 Gew.-% enthalten.

Die erfindungsgemäßen Mischungen enthalten als Komponente (II) 2,5 bis 60, vorzugsweise 5 bis 48 Gew.-% mindestens eines viskositätserniedrigenden Zusatzes. Geeignete Zusätze dieser Art sind beispielsweise in der EP-A-0 342 887 beschrieben. Bei diesen Verbindungen handelt es sich vorzugsweise um Polyalkylenglykole, alkoxylierte Alkohole, alkoxylierte Alkylphenole, alkoxylierte Amine und Hydroxyverbindungen mit 1 bis 4 OH-Gruppen und 2 bis 10 C-Atomen. Die Molmasse (Zahlenmittel) der Polymeren beträgt jeweils höchstens 2500.

Geeignete Polyalkylenglykole sind beispielsweise Polymerisate von Ethylenoxid, Propylenoxid und/oder Butylenoxid. Einzelne Verbindungen dieser Art sind beispielsweise Diethylenglykol, Triethylenglykol, Tetraethylenglykol, Dipropylenglykol, Tripropylenglykol, Bockcopolymerisate aus Ethylenoxid und Propylenoxid, Blockcopolymerisate aus Ethylenoxid, Propylenoxid und Butylenoxid, Blockcopolymerisate aus Ethylenoxid und Butylenoxid sowie statistisch aufgebaute Copolymerisate aus Ethylenoxid, Propylenoxid und/oder Butylenoxid. Geeignete alkoxylierte Alkohole sind beispielsweise die Umsetzungsprodukte von C₁- bis C₂₂-Alkoholen mit Ethylenoxid, Propylenoxid und/oder Butylenoxid. Insbesondere eignen sich alkoxylierte Alkohole mit 8 bis 22 C-Atomen. Die Alkoxylierung dieser Alkohole kann mit Hilfe von Ethylenoxid und/oder Propylenoxid erfolgen. Die alkoxylierten Alkohole können gegebenenfalls auch Endgruppen verschlossen sein, d.h. die endständige OH-Gruppe kann verethert oder verestert sein. Außerdem eignen sich alkoxylierte Alkylphenole als viskositätserniedrigender Zusatz. Produkte dieser Art sind bekannt. Sie werden beispielsweise durch Umsetzung von C₁- bis C₁₈-Alkylphenolen mit 2 bis 60 mol eines Alkylenoxids oder einer Mischung von Alkylenoxiden hergestellt. Zum Einsatz kommen auch Umsetzungsprodukte von 1 Mol eines einwertigen C₈ bis C₂₂-Alkohols mit 2 bis 70 Mol Ethylenoxid und 0 bis 30 Mol Propylenoxid. Als Alkylenoxide kommen in erster Linie Ethylenoxid und/oder Propylenoxid in Betracht. Geeignete alkoxylierte Amine werden beispielsweise durch Alkoxylierung von C₁- bis C₂₂-Alkylaminen, Ethylendiamin, Diethylentriamin oder anderen Polyaminen erhalten. In einigen Fällen hat es sich als vorteilhaft erwiesen, alkoxylierte Amine als Komponente (II) zu verwenden, die durch Umsetzung von Mono- oder Diaminen mit Ethylenoxid und anschließend Propylenoxid erhalten werden, wobei das Molverhältnis von Ethylenoxideinheiten zu Propylenoxideinheiten im Additionsprodukt jeweils 1 : 4 bis 1 : 20 beträgt. Die Molmassen (Zahlenmittel) der Polymeren beträgt höchstens 2500 und liegt vorzugsweise in dem Bereich von 106 bis 1600.

Zur Verwendung in Waschmitteln ist es entscheidend, daß die eingesetzten erfindungsgemäßen Mischungen keine Verschlechterung der waschtechnischen und ökologischen Eigenschaften der damit erhaltenen Waschmittel verursachen. Um dies zu vermeiden werden vorzugsweise solche Mischungen mit niedriger Viskosität eingesetzt, deren Komponenten II oder III in der Waschmittelformulierung verbleiben können ohne eine Verschlechterung der waschtechnischen Eigenschaften zu bewirken. Die erfindungsgemäßen Mischungen werden vorzugsweise bei der Herstellung von Textilwaschmitteln in solchen Mengen eingesetzt, daß Waschmittelformulierungen entstehen, die die Komponente I der erfindungsgemäßen Mischungen in wirksamen Mengen enthalten, z.B. in Mengen von 0,1 bis 10 Gew.-%.

Weitere geeignete viskositätserniedrigende Zusätze (II) sind Hydroxyverbindungen mit 1 bis 4 OH-Gruppen und 2 bis 10 C-Atomen im Molekül. Beispiele hierfür sind Ethylenglykol, Propylenglykol, Ethanol, Isopropanol, n-Propanol, n-Butanol, Isobutanol, Glycerin und Pentaerythrit.

Die erfindungsgemäßen Mischungen können als Komponente (III) 0 bis 40 Gew.-% an homogenisierenden oder phasenstabilisierenden Zusätzen enthalten. Solche Zusätze sind beispielsweise
(a) Wasser,
(b) ein- und zweibasischer Carbonsäuren mit 8 bis 25 C-Atomen, Fettalkoholsulfate, Fettalkoholsulfonate, Alkylbenzolsulfonate, Sulfonierungs- und/oder Sulfatierungsprodukten von alkoxylierten Alkoholen mit 8 bis 22 C-Atomen oder Alkylphenole, Alkyl(poly)glukoside mit 1 bis 20 C-Atomen in der Alkylgruppe, Mono-, Oligo- und Polysaccharide sowie der daraus durch Oxidation oder Reduktion erhältlichen Derivate sowie
(c) Mischungen aus (a) und (b) im Gewichtsverhältnis 100 : 1 bis 20 : 80.

Als Komponente (III) wird vorzugsweise Wasser eingesetzt. Falls homogenisierende oder phasenstabilierende Zusätze in den Mischungen enthalten sind, so betragen die davon eingesetzten Mengen vorzugsweise 2 bis 20 Gew.-%, bezogen auf die Mischungen.

Die Mischungen aus den Komponenten (I), (II) und gegebenenfalls (III) werden beispielsweise dadurch hergestellt, daß man die Polymeren der Komponente (I) zur Schmelze erhitzt und die Komponenten (II) und gegebenenfalls (III) bei Temperaturen in dem Bereich von beispielsweise 50 bis 100°C zumischt. Die Zugabe dieser Komponenten kann auf einmal, portionsweise oder als kontinuierliche Zudosierung erfolgen. Die erfindungsgemäßen Mischungen besitzen deutlich niedrigere Viskositäten als die Polymeren (I) und außerdem deutlich niedrigere Viskositäten als Mischungen aus den Polymeren (I) und Wasser bei einem Polymergehalt, der mit dem Polymergehalt erfindungsgemäßer Mischungen vergleichbar ist. Besonders bevorzugte und für den Einsatz in Wasch- und Reinigungsmitteln geeignete alkoxylierte Verbindungen sind Ethoxylierungsprodukte von vorzugsweise linearen aliphatischen C₈- bis C₂₂-Alkoholen. Die erfindungsgemäßen Mischungen sind bei Wahl geeigneter Kombinationen von der Bestandteile (I), (II) und gegebenenfalls (III) vorzugsweise einphasig erhältlich. In manchen Fällen kann zwar keine einphasige Mischung erreicht werden, jedoch sind die Mischungen dennoch stabil genug, um eine homogene Einarbeitung in Waschmittelformulierungen zu gewährleisten. Die erfindungsgemäßen Mischungen haben bei einer Temperatur von 60°C eine Viskosität von höchstens 15000, vorzugsweise höchstens 5000 mPas.

Die erfindungsgemäßen Mischungen, die gegenüber den reinen Polymerisaten und gegenüber Mischungen aus den Polymerisaten und Wasser eine verringerte Viskosität haben, sind für alle Anwendungen einsetzbar, die für die amphiphilen nicht-ionischen Pfropfcopolymerisate aus der Literatur bekannt sind, und zwar als Zusatz bei der Herstellung von Wasch- und Reinigungsmitteln. Solche Formulierungen haben vergrauungsinhibierende und schmutzdispergierende Eigenschaften, wobei die Waschmittel phosphatfrei sind oder einen reduzierten Phosphatgehalt von weniger als 25 Gew.-% berechnet als Trinatriumphosphat haben. Außerdem eignen sich die erfindungsgemäßen Mischungen als Deinking-Prozeßhilfsmittel.

Beispielsweise läßt sich die Viskosität eines Pfropfcopolymeren von Vinylacetat auf ein Polyethylenglycol der Molmasse 6000 durch Mischung mit Wasser lediglich von 200.000 mPas auf ca.
90.000 mPas absenken und steigt bei Mischungen mit über 25 Gew.-% Wasser über die Viskosität des reinen Polymeren an.

Die Prozentangaben in den Beispielen sind Gew.-%. Die K-Werte wurden nach H. Fikentscher, Cellulose-Chemie, Band 13, 58-64 und 71-74 (1932) in 1 %iger Lösung in Essigsäuremethylester bei einer Temperatur von 25°C gemessen. Die Viskositäten wurden an einem Kegel/Platte-Viskosimeter bei einer Temperatur von 50°C bestimmt.

### Beispiele

### Pfropfcopolymerisat A:

Hergestellt nach der in der EP-B-0 219 048 angegebenen Vorschrift durch radikalisch initiierte Pfropfung von Vinylacetat auf ein Polyethylenoxid der Molmasse 6000 (Zahlenmittel) im Gewichtsverhältnis 1,6 : 1 in einer lösungsmittelfreien Schmelze.

Das Pfropfcopolymerisat hatte einen K-Wert von 21,8 und bei einer Temperatur von 50°C eine Viskosität von 203 000 mPas.

### Beispiele 1 bis 10

Das Pfropfpolymer A wurde auf einer Temperatur von 80°C erhitzt und mit den in der Tabelle angegebenen Komponenten (II) und (III) homogen gemischt. Die Mischungen waren einphasig und hatten bei einer Temperatur von 50°C die in der Tabelle angegebene Viskosität.

**Tabelle**

| Bsp.-Nr. | Pfropfcopolymer A [Gew.-%] | Komponente (II) [Gew.-%] | | Komponente (III) Wasser [Gew.-%] | Viskosität der Mischung [mPas] bei 50°C |
|---|---|---|---|---|---|
| 1 | 70 | Ethylenglykol | 15 | 15 | 40.000 |
| 2 | 70 | Triethylenglykol | 15 | 15 | 23.000 |
| 3 | 60 | Diethylenglykol | 20 | 20 | 28.000 |
| 4 | 60 | Diethylenglykol | 36 | 4 | 2.800 |
| 5 | 70 | Diethylenglykol | 28 | 9 | 8.200 |
| 6 | 80 | Diethylenglykol | 21 | 6 | 13.000 |
| 7 | 70 | C_{13/15}EO₇*⁾ | 14 | 15 | 10.500 |
| 8 | 70 | Propylenglykol | 15 | 15 | 6.400 |
| 9 | 70 | Tripropylenglykol | 15 | 15 | 4.600 |
| 10 | 80 | iso-Propanol | 10 | 10 | 3.290 |

| | | | | | |
|---|---|---|---|---|---|
| *⁾ C₁₃-C₁₅-Oxoalkohol ethoxyliert mit 7 Mol Ethylenoxid | | | | | |

Die vergrauungsinhibierende Wirkung der Mischungen aus Beispielen 1 bis 10 wurde folgendermaßen geprüft: Prüfgewebe wurde zusammen mit einer Standardanschmutzung 3 aufeinanderfolgenden Wäschen unterzogen. Das Schmutzgewebe wurde nach jeder Wäsche erneuert, wobei das Prüfgewebe nach jeder Wäsche stärker anschmutzte. Der Weißgrad des Prüfgewebes nach der 3. Wäsche diente zur Beurteilung des Anschmutzungsgrades. Die fotometrische Messung der Remission in Prozent wurde im vorliegenden Fall mit dem Elrepho (Datacolor) bei der Wellenlänge 460 nm gemessen (Barium-Primärweißstandard nach DIN 5033). Das bei den Versuchen verwendete Testwaschmittel hatte folgende Zusammensetzung.

| Testwaschmittel | |
|---|---|
| Na-C₁₀-C₁₃-alkylenbezolsulfonat | 6 % |
| C₁₃-C₁₅-Fettalkohol ethoxyliert mit 7 Mol Ethylenoxid pro Mol Fettalkohol | 5 % |
| Seife | 3 % |
| Zeolith A | 30 % |
| Na-metasilikat x 5 H₂O | 5 % |
| Na-carbonat | 7,5 % |
| | |
| Polymer (Wirksame Substanz) | 1,0 % |

Die Formulierung wurde rechnerisch mit H₂O auf 100 % ergänzt.

| Prüfbedingungen | |
|---|---|
| Prüfgeräte | Launder-O-meter |
| Wasserhärte | 16° d |
| Flottenverhältnis | 1:12,5 |
| Waschtemperatur | 60°C |
| Waschzeit | 30 min |
| Waschmittelkonzentration | 6 g/l |
| Prüfgewebe | 5 g Baumwolle, 2,5 g Polyester/Baumwolle, 2,5 g Polyester (Standardschmutzgewebe der Wäschereiforschungsanstalt Krefeld) |

Die nachfolgende Tabelle zeigt die Erhöhung der Remission von Polyestergewebe nach Zusatz von 1 % Polymer (wirksame Substanz) der erfindungsgemäßen Mischungen.

| Beispiel | Vergleichsbeispiel | Polymer | Remission |
|---|---|---|---|
| - | 1 | ohne | 54,5 |
| - | 2 | Pfropfcopolymer (100 %) | 70,9 |
| 11 | - | 1 | 71,8 |
| 12 | - | 2 | 71,2 |
| 13 | - | 3 | 69,5 |
| 14 | - | 4 | 70,5 |
| 15 | - | 5 | 70,8 |
| 16 | - | 6 | 69,8 |
| 17 | - | 7 | 68,1 |
| 18 | - | 8 | 70,6 |
| 19 | - | 9 | 70,3 |
| 20 | - | 10 | 71,6 |

Die vorstehenden Beispiele zeigen, daß bei Einsatz der erfindungsgemäßen Mischungen derselbe vergrauungsinhibierende Effekt zu beobachten ist, wie bei Verwendung des reinen Polymeren.

## Patentansprüche

1. Niederviskose Mischungen aus
(I) 40 bis 97,5 Gew.-% amphiphilen nichtionischen Pfropfcopolymerisaten, die
(a) mindestens 20 Gew.-% Polyalkylenoxideinheiten oder Polyvinylpyrrolidoneinheiten als hydrophilen Teil des Moleküls und
(b) mindestens 40 Gew.-% Vinylester- und/oder (Meth)acrylestereinheiten als hydrophoben Teil des Moleküls einpolymerisiert enthalten und
(II) 2,5 bis 60 Gew.-% mindestens eines viskositätserniedrigenden Zusatzes aus der Gruppe Polyalkylenglykole, alkoxylierte Alkohole, alkoxylierte Alkylphenole, 1 alkoxylierte Amine und Hydroxyverbindungen mit bis 4 OH-Gruppen und 2 bis 10 C-Atomen, wobei die Molmasse M_{N} der Polymeren jeweils höchstens 2500 beträgt und
(III) 0 bis 40 Gew.-% homogenisierenden oder phasenstabilisierenden Zusätzen aus der Gruppe
(a) Wasser,
(b) ein- und zweibasischer Carbonsäuren mit 8 bis 25 C-Atomen, Fettalkoholsulfate, Fettalkoholsulfonate, Alkylbenzolsulfonate, Sulfonierungs- und/oder Sulfatierungsprodukten von alkoxylierten Alkoholen mit 8 bis 22 C-Atomen oder Alkylphenolen, Alkyl(poly)glukosiden 1 mit bis 20 C-Atomen in der Alkylgruppe, Mono-, Oligo- und Polysacchariden sowie der daraus durch Oxidation oder Reduktion erhältlichen Derivate sowie
(c) Mischungen aus (a) und (b) im Gewichtsverhältnis 100 : 1 bis 20 : 80.

2. Niederviskose phasenstabile Mischungen aus
(I) 50 bis 90 Gew.-% amphiphilen nichtionischen Pfropfpolymerisaten, die
a) mindestens 20 Gew.-% Polyalkylenoxideinheiten als hydrophilen Teil des Moleküls und
b) mindestens 40 Gew.-% Vinylester- und/oder Acrylestereinheiten als hydrophoben Teil des Moleküls einpolymerisiert enthalten,
(II) 5 bis 48 Gew.-% mindestens eines viskositätserniedrigenden Zusatzes aus der Gruppe Polyalkylenglycole, alkoxylierte Alkohole, alkoxylierte Amine und Hydroxyverbindungen mit 1 bis 4 OH-Gruppen und 2 bis 10 C-Atomen, wobei die Molmassen Mₙ der Polymeren jeweils höchstens 2500 beträgt und
(III) 2 bis 20 Gew.-% Wasser
mit einer Viskosität kleiner 5.000 mPas bei 60°C.

3. Niederviskose Mischungen nach Anspruch 1, dadurch gekennzeichnet, daß die amphiphilen nichtionischen Pfropfcopolymerisate (I) durch radikalisch initiierte Pfropfcopolymerisation von
(a) Alkylenoxid-oder Vinylpyrrolidoneinheiten enthaltenden Polymeren mit
(b) Vinylester- und/oder (Meth)acrylestern
in einer lösemittelfreien Schmelze oder in Gegenwart von höchstens 20 Gew.-% eines Lösemittels hergestellt werden.

4. Niederviskose Mischungen nach einem der Ansprüche 1 bis 3, dadurch gekennzeichnet, daß man als viskositätserniedrigenden Zusatz (II) alkoxylierte Alkohole mit 8 bis 22 C-Atomen, Polyalkylenglykole und/oder Isopropanol einsetzt.

5. Niederviskose Mischungen nach Anspruch 1 oder 2, dadurch gekennzeichnet, daß man als viskositätserniedrigenden Zusatz (II) die Umsetzungsprodukte von 1 Mol eines einwertigen C₈- bis C₂₂-Alkohols mit 2 bis 70 Mol Ethylenoxid und 0 bis 30 Mol Propylenoxid einsetzt.

6. Verwendung von niederviskosen Mischungen nach den Ansprüchen 1 bis 5 als Zusatz bei der Herstellung von Wasch- und Reinigungsmitteln.

## Claims

1. Low viscosity mixtures of
(I) from 40 to 97.5% by weight of amphiphilic nonionic graft copolymers comprising, in copolymerized form,
(a) at least 20% by weight of polyalkylene oxide units or polyvinylpyrrolidone units as hydrophilic part of the molecule and
(b) at least 40% by weight of vinyl ester and/or (meth)acrylic ester units as hydrophobic part of the molecule, and
(II) from 2.5 to 60% by weight of at least one viscosity-reducing additive selected from the group consisting of polyalkylene glycols, alkoxylated alcohols, alkoxylated alkylphenols, alkoxylated amines and hydroxy compounds having from 1 to 4 OH groups and from 2 to 10 carbon atoms, the molecular mass M_{N} of the polymers in each case being not more than 2500, and
(III) from 0 to 40% by weight of homogenizing or phase-stabilizing additives selected from the group consisting of
(a) water,
(b) monobasic and dibasic carboxylic acids having from 8 to 25 carbon atoms, fatty alcohol sulfates, fatty alcohol sulfonates, alkylbenzenesulfonates, sulfonation and/or sulfation products of alkoxylated alcohols having from 8 to 22 carbon atoms or alkylphenols, alkyl(poly)glucosides having from 1 to 20 carbon atoms in the alkyl group, mono-, oligo- and polysaccharides and the oxidation or reduction derivatives thereof, and
(c) mixtures of (a) and (b) in a weight ratio of from 100 : 1 to 20 : 80.

2. Low viscosity phase-stable mixtures of
(I) from 50 to 90% by weight of amphiphilic nonionic graft copolymers comprising, in copolymerized form,
(a) at least 20% by weight of polyalkylene oxide units as hydrophilic part of the molecule and
(b) at least 40% by weight of vinyl ester and/or acrylic ester units as hydrophobic part of the molecule,
(II) from 5 to 48% by weight of at least one viscosity-reducing additive selected from the group consisting of polyalkylene glycols, alkoxylated alcohols alkoxylated amines and hydroxy compounds having from 1 to 4 OH groups and from 2 to 10 carbon atoms, the molecular mass M_{N} of the polymers in each case being not more than 2500, and
(III) from 2 to 20% by weight of water
having a viscosity less than 5000 mPas at 60°C.

3. Low viscosity mixtures as claimed in claim 1 wherein the amphiphilic nonionic graft copolymers (I) are prepared by free-radically initiated graft copolymerization of
(a) polymers containing alkylene oxide or vinylpyrrolidone units with
(b) vinyl and/or (meth)acrylic esters
in a solvent-free melt or in the presence of not more than 20% by weight of a solvent.

4. Low viscosity mixtures as claimed in any one of claims 1 to 3 wherein the viscosity-reducing additive (II) comprises alkoxylated alcohols having from 8 to 22 carbon atoms, polyalkylene glycols and/or isopropanol.

5. Low viscosity mixtures as claimed in claim 1 or 2 wherein the viscosity-reducing additive (II) comprises the reaction products of 1 mol of a monohydric C₈- to C₂₂-alcohol with from 2 to 70 mol of ethylene oxide and from 0 to 30 mol of propylene oxide.

6. The use of low viscosity mixtures as claimed in any of claims 1 to 5 as additament in the production of detergents and cleaners.

## Revendications

1. Mélanges à faible viscosité comprenant
(I) 40 à 97,5 % en poids de copolymères greffés non-ioniques amphiphiles, qui contiennent en liaison polymère
a) au moins 20 % en poids de motifs poly(oxyde d'alkylène) ou polyvinylpyrrolidone en tant que partie hydrophile de la molécule et
b) au moins 40 % en poids de motifs ester vinylique et/ou ester (méth)acrylique en tant que partie hydrophobe de la molécule et
(Il) 2,5 à 60 % en poids d'au moins un additif diminuant la viscosité choisi dans le groupe formé par les polyalkylèneglycols, les alcools alcoxylés, les alkylphénols alcoxylés, les amines alcoxylées et les composés hydroxy à 1-4 groupements OH et 2-10 atomes de carbone, la masse molaire M_{N} des polymères s'élevant à chaque fois à 2500 au maximum et
(III) 0 à 40 % en poids d'additifs d'homogénéisation ou de stabilisation de phases choisi dans le groupe formé par
a) l'eau,
b) les acides carboxyliques ayant une ou deux acidités à 8-25 atomes de carbone, les sulfates d'alcool gras, les sulfonates d'alcool gras, les alkylbenzènesulfonates, les produits de la sulfonation et/ou de la sulfatation d'alcools alcoxylés à 8-22 atomes de carbone ou d'alkylphénols, les alkyl(poly)glucosides à 1-20 atomes de carbone dans le groupement alkyle, les mono-, oligo- et polysaccharides ainsi que leurs dérivés obtenus par oxydation ou réduction ainsi que
c) les mélanges de a) et b) dans un rapport en poids de 100:1 à 20:80.

2. Mélanges à phases stables et à faible viscosité comprenant
(I) 50 à 90 % en poids de polymères greffés non-ioniques amphiphiles, qui contiennent en liaison polymère
a) au moins 20 % en poids de motifs poly(oxyde d'alkylène) en tant que partie hydrophile de la molécule et
b) au moins 40 % en poids de motifs ester vinylique et/ou ester acrylique en tant que partie hydrophobe de la molécule,
(Il) 5 à 48 % en poids d'au moins un additif diminuant la viscosité choisi dans le groupe formé par les polyalkylèneglycols, les alcools alcoxylés, les amines alcoxylées et les composés hydroxy à 1-4 groupements OH et à 2-10 atomes de carbone, les masses molaires Mₙ des polymères s'élevant à chaque fois à 2500 au maximum et
(III) 2 à 20 % en poids d'eau
avec une viscosité inférieure à 5000 mPas à 60°C.

3. Mélanges à faible viscosité selon la revendication 1, caractérisés en ce que les copolymères greffés non-ioniques amphiphiles (I) sont préparés par copolymérisation de greffage, amorcée de façon radicalaire, de
a) polymères contenant des motifs oxyde d'alkylène ou vinylpyrrolidone avec
b) des esters vinyliques et/ou des esters (méth)acryliques dans une masse fondue exempte de solvants, ou en présence d'au plus 20 % en poids d'un solvant.

4. Mélanges à faible viscosité selon l'une quelconque des revendications 1 à 3, caractérisés en ce que l'on utilise des alcools alcoxylés à 8-22 atomes de carbone, des polyalkylèneglycols et/ou de l'isopropanol en tant qu'additif diminuant la viscosité (II).

5. Mélanges à faible viscosité selon la revendication 1 ou 2, caractérisés en ce que l'on utilise les produits de la réaction d'une mole d'un alcool en C8-C22 monofonctionnel avec 2-70 moles d'oxyde d'éthylène et 0-30 moles d'oxyde de propylène, en tant qu'additif diminuant la viscosité (Il).

6. Utilisation de mélanges à faible viscosité selon l'une quelconque des revendications 1 à 5 en tant qu'additif pour la fabrication d'agents de lavage et de nettoyage.
